# EUROPEAN PATENT APPLICATION

(11) **EP 4 733 028 A2**
(43) Date of publication of application: **29.04.2026**
(21) Application number: 25197153.7
(22) Date of filing: 20.08.2025
(51) Int. Cl.: B29C 33/42, B29C 45/14, B64C 23/06, B60R 16/02, H01B 7/18, B29C 39/02, H02G 11/00

(54) **A MOULD AND A METHOD FOR A SLEEVE OF A WIRING HARNESS**

(30) Priority: 22.10.2024 GB 202415550; 22.10.2024 GB 202415551
(71) Applicant: Airbus Operations Limited, Bristol BS34 7PA (GB)
(72) Inventor: CLOUGH, James, Bristol, BS34 7PA (GB); RUIZ DE PABLO, Javier, Bristol, BS34 7PA (GB)
(74) Representative: Abel & Imray LLP

(57) **Abstract**

A mould for moulding a sleeve of protective material 25 onto a wiring harness 15. The mould comprises: a mould body 33; an inlet 37; an outlet 39; and a channel 35 extending through the mould body 33 and connecting the inlet 37 to the outlet 39. The mould also comprises a plurality of centralising spacers 41, configured to hold the wiring harness 15 centrally within the channel 35 as the wiring harness 15 extends between the inlet and the outlet. The mould also comprises an injection port and an exit port arranged to convey fluid sleeve material into and out of the channel. The channel 35 follows a path along a helical curve as it extends between the inlet and the outlet of the mould.

## Description

### BACKGROUND OF THE INVENTION

The present disclosure relates to a mould for applying a sleeve of protective material onto a wiring harness, and to a method of applying the sleeve of protective material onto the wiring harness.

There is a trend towards increasingly higher aspect ratio wings for large passenger aircraft, for which it is desirable to have correspondingly large wing spans. However, the maximum aircraft span is effectively limited by airport operating rules which govern various clearances required when manoeuvring around the airport (such as the span and/or ground clearance required for gate entry and taxiway usage).

Therefore, movable wing tip devices have been introduced into passenger aircraft, where a wing tip device is movable between a flight configuration for use during flight, and a ground configuration for use during ground-based operations. In the flight configuration, the wing tip device forms an extension of the wing and contributes to the lift generated by the wing. In the ground configuration, the wing tip device is moved away from the flight configuration such that the span of the aircraft wing is reduced, thereby allowing use of existing gates and taxiways. Such an arrangement is sometimes referred to as a 'folding wing tip'. It will be appreciated that such a term encompasses a range of sizes, and where the hinge is relatively far inboard this may equally be considered a 'folding wing' or 'movable wing'.

It is desirable to transfer power and/or data into a folding wing tip. In most parts of an aircraft, power and data can be readily provided via suitable electrical wiring. This is typically provided in a wiring harness (also referred to as a cable harness, or wiring loom). However, in the context of a folding wing tip there are several challenges. Firstly, the wiring harness must extend across a joint and therefore be arranged to cope with repeated exposure to potentially harsh environmental conditions, with movement, and/or with changes in tensional loads. Secondly, there tends to be relatively little available volume within the aircraft structure towards the tip of the wing. The ability to incorporate a degree of slack in the wiring harness may therefore be restricted.

It has also been recognised that the movement of a folding wing tip can also cause a related movement (for example flex) of the wiring harness. This movement, if not properly managed, may have the ability to cause wear to the wiring harness and/or to the surrounding components and structure of the wing assembly.

Aspects of the present disclosure seek to mitigate one or more of the above-mentioned challenges.

### SUMMARY OF THE INVENTION

According to a first aspect of the disclosure, there is provided a method of applying a sleeve of protective material onto a wiring harness, the method comprising the steps of: locating the wiring harness into a helical channel in a mould body; holding the wiring harness centrally within the helical channel as the wiring harness extends along the channel; injecting fluid sleeve material into the channel such that it surrounds the wiring harness; and solidifying the sleeve material.

Moulding the protective sleeve to follow a path along a helical curve has been found to be especially beneficial. For example, by moulding a length of the sleeve into this shape, the degree of flex of the wiring harness if it moves, may be reduced and/or able to be better managed. This is especially beneficial in the context of wiring harnesses used on a folding wing tip, because a wiring harness and the sleeve extending across a folding wing tip joint will tend to flex during movement of the wing tip device between the flight and ground configurations.

The fluid sleeve material may be in any form that is able to flow into the channel. The fluid sleeve material may, for example, be a molten material. The fluid sleeve material may be a pre-cured material. It will be appreciated that the term 'solidifying', encompasses arrangements in which the solidified material and/or the sleeve formed from the solidified material, remains elastically deformable. Indeed, in preferred embodiments, the protective sleeve and the wiring harness, when removed from the mould is elastically deformable. For example, the sleeve and wiring harness, when removed from the mould, may be elastically deformable from the path following the helical curve. The sleeve may be arranged to elastically deform under an external load, but is preferably arranged to return to an equilibrium state upon removal of the external load, wherein, in the equilibrium state, the protective sleeve follows the path along the helical curve.

The method according to the first aspect, may further comprise the step of removing the wiring harness, together with the surrounding solidified sleeve, from the mould.

According to a second aspect of the disclosure, there is provided mould for moulding a sleeve of protective material onto a wiring harness, the mould comprising: a mould body; an inlet; an outlet; a channel extending through the mould body and connecting the inlet to the outlet; a plurality of centralising spacers, configured to hold the wiring harness centrally within the channel as the wiring harness extends between the inlet and the outlet; an injection port arranged to convey fluid sleeve material into the channel such that it surrounds the wiring harness; and an exit port for conveying excess fluid sleeve material when the channel is full; wherein the channel follows a path along a helical curve as it extends between the inlet and the outlet.

The mould body may comprise a plurality of separable sub-sections. Each sub-section may define a part of the channel. The mould may be arranged such that when the sub-sections are assembled they collectively define the channel. Such an arrangement has been found to be especially beneficial when forming a sleeve that follows a helically curved path, because it may allow the sleeve to be removed from the mould via disassembly of the sub-sections. This may allow the mould to be repeatedly used.

A plurality, and optionally a multiplicity, of centralising spacers may be arranged around the inner perimeter of the inlet. A plurality, and optionally a multiplicity, of centralising spacers may be arranged around the inner perimeter of the outlet. Such an arrangement may allow the wiring harness to be readily located within the centre of the channel, thereby ensuring an even distribution of sleeve material around the wiring harness.

The helical curve may extend around and along a helix axis. It will be appreciated that the helical curve shape is the shape formed by the channel (for example the centre-line of the channel) as it extends along its length (i.e. as it extends between the inlet and the outlet).

In some arrangements, additional lengths of sleeve may be applied either side of the inlet and outlet. For example, the mould may comprise, or be attachable to, an additional mould for moulding a first sleeve length upstream of the inlet. The mould may comprise, or be attachable to, an additional mould for moulding a second sleeve length downstream of the outlet. The first and/or second sleeve lengths may be moulded onto the wiring harness. The first and/or second sleeve lengths may follow a path (for example a non-helical path, such as a generally linear path) extending either side of the helical curve.

The mould may comprise a plurality, or a multiplicity, of injection ports arranged to convey fluid sleeve material into the channel such that it surrounds the wiring harness. The mould may comprise a plurality, or a multiplicity, of exit ports for conveying excess fluid sleeve material when the channel is full. The provision of multiple injection ports may facilitate a uniform distribution of the sleeve material within the channel. The provision of multiple exit ports may also facilitate this uniform coverage of the sleeve material in the channel.

The sleeve material, when solidified, is preferably an electrical insulator. The wiring harness may comprise a high voltage conductor, arranged to transmit a high voltage supply. The high voltage supply may be at least 240V DC. The high voltage supply may be up to 270V DC. The high voltage supply may be up to 300V DC. The high voltage supply may be 270V DC. Aspects of the disclosure may be especially beneficial when a wiring harness is used for a high voltage supply because the presence of the high voltage creates specific safety requirements.

Each of the plurality of conductors in the wiring harness is preferably a sheathed conductor. Each of the conductors may take a number of forms depending on its use. The conductor may be a wire, but is more preferably a cable. For example, the conductor may be a single core cable, or a multi-core cable. The first and/or second wiring harnesses may each comprise a multiplicity of conductors.

According to another aspect of the invention, there is provided a wiring harness encased in a moulded protective sleeve, the sleeve having been applied to the wiring harness using the method of the other aspect of the invention, such that the wiring harness and the sleeve follow a path along a helical curve along a length of the sleeve.

According to another aspect of the invention, there is provided a multi-piece mould for moulding a sleeve of protective material onto a wiring harness, the mould comprising: a mould body; an inlet; an outlet; a generally circular-cylindrical channel, following a path along a helical curve, the channel extending through the mould body and connecting the inlet to the outlet; a first multiplicity of spacers, located around the inner perimeter of the inlet and configured to hold the wiring harness centrally within the channel at the inlet; a second multiplicity of spacers, located around the inner perimeter of the outlet and configured to hold the wiring harness centrally within the channel at the outlet; a plurality of injection ports arranged to convey flowable sleeve material into the channel such that the flowable material surrounds the wiring harness; and wherein the mould body comprises separable sub-sections, each sub-section defining a part of the channel and being arranged such that when the sub-sections are assembled they collectively define the channel, and wherein the sub-sections are separable to allow the resulting helically shaped sleeve to be removed from the mould once the flowable sleeve material has solidified.

According to another aspect of the invention, there is provide an aircraft wing assembly comprising the wiring harness and sleeve of the other aspects of the invention. The wing assembly may comprise: a fixed wing; and a wing tip device moveably mounted at a joint at the end of the fixed wing, the wing tip device being moveable about the joint between: (i) a flight configuration for use during flight, and (ii) a ground configuration for use during ground-based operations, in which ground configuration the wing tip device is moved relative to the fixed wing such that the span of the wing is reduced. The wiring harness may extend between the fixed wing and the wing tip device, a length of the wiring harness being encased in a length of the protective sleeve.

It will of course be appreciated that features described in relation to one aspect of the present disclosure may be incorporated into any and all other aspects of the present disclosure. Furthermore, the method of the disclosure may incorporate any of the features described with reference to the apparatus of the disclosure and *vice versa.*

### DESCRIPTION OF THE DRAWINGS

Embodiments of the present disclosure will now be described by way of example only with reference to the accompanying schematic drawings of which:
Figures 1A and 1B show a plan view and a frontal view respectively, of an aircraft that incorporates a wiring harness and protective sleeve that has been moulded according to a first embodiment of the invention;
Figure 1C shows a length of wiring harness encased within a protective sleeve, extending between the fixed wing and wing tip device in Figures 1A and 1B;
Figure 2 is a flow chart showing a method of applying a sleeve of protective material onto a wiring harness that has been used to create the arrangement in Figure 1C;
Figure 3 is an exploded view showing a mould used in the method of Figure 2;
Figures 4A to 4D show a step-wise assembly of the mould of Figure 3 during the method of Figure 2; and
Figure 5 is a close-up view of the inlet in the mould of Figures 3 to 4D.

### DETAILED DESCRIPTION

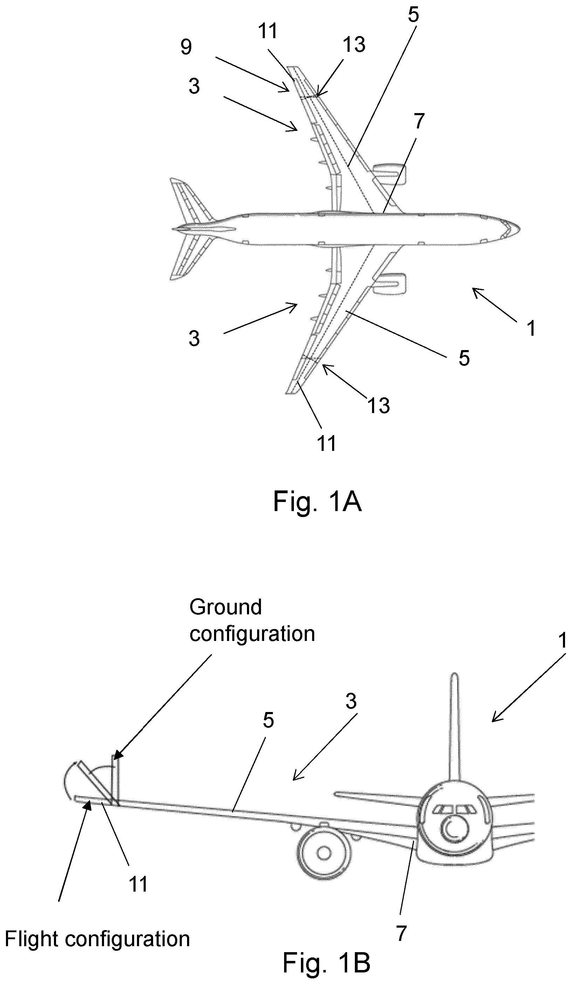

Referring first to Figures 1A and 1B, these figures show a plan view and a front view of an aircraft 1 that incorporates a wiring harness and protective sleeve that has been moulded according to a first embodiment of the invention.

The aircraft 1 comprises two main wings 3 extending outwardly from the fuselage (one wing is not fully visible in Figure 1B). Each wing 3 comprises a fixed wing 5 extending from the root 7 to the tip 9. At the tip 9 of the fixed wing 5, the wing 3 also comprises a moveable wing tip device 11. In this embodiment, the wing tip device 11 comprises a planar wing tip extension. The wing tip device 11 is rotatably mounted on a hinge joint 13, having a hinge axis. As such, the wing tip device 11 is able to rotate about the hinge joint 13 relative to the fixed wing 5.

The aircraft 1 also comprises an actuator assembly (not shown) operable to rotate the wing tip device 11 about the hinge joint 13. Referring to Figure 1B, the wing tip device 11 is rotatable about the hinge joint 13 between a flight configuration, and a ground configuration. Figure 1B also shows the wing tip device 11 when moving partway between these two configurations.

In the flight configuration, the wing tip device 11 is an extension of the fixed wing 5. Accordingly, the upper and lower surfaces of the fixed wing 5 are continuous with the upper and lower surfaces of the wing tip device 11. The leading and trailing edges of the fixed wing 5 are also continuous with the respective leading and trailing edges of the wing tip device 11 (see Figure 1A). Such an arrangement is beneficial as it provides a relatively large wing span during flight, thereby providing an aerodynamically efficient aircraft.

The wing tip device 11 is rotatable, upwards, from the flight configuration to a ground configuration in which the wing tip device 11 is rotated, to a substantially upright position (shown in Figure 1B). The wing tip device 11 is moveable to this configuration when the aircraft 1 is on the ground. Once rotated to such a position, the span of the aircraft 1 is sufficient to meet airport compatibility gate limits. Thus, the aircraft 1 of the first embodiment can have a large span (exceeding gate limits) during flight, but is still able to comply with gate limits when on the ground.

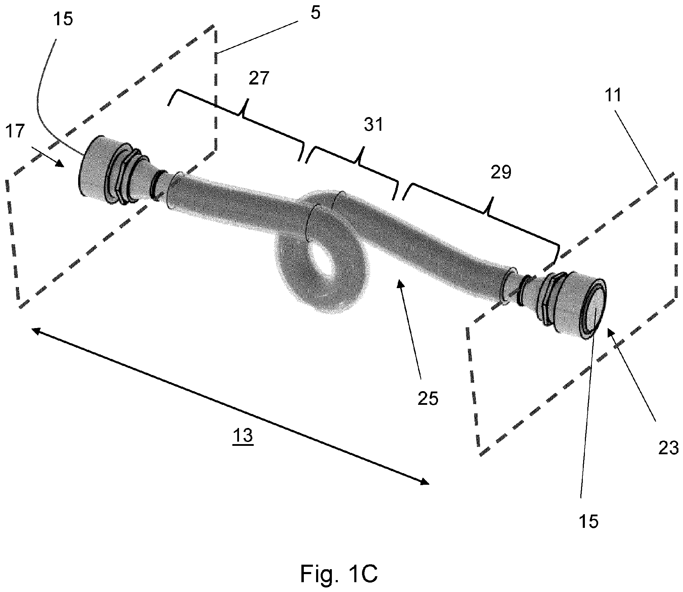

Aspects of the present disclosure relate to a wiring harness 15 and protective sleeve 25, extending across the joint 13, from the fixed wing 5 into the wing tip device 11. This will now be described in more detail with reference to Figure 1C.

Figure 1C illustrates a protective sleeve 25 which encases a wiring harness 15. The wiring harness 15 is only visible schematically, in cross section, at the end of the sleeve 25 in Figure 1C, but in practice the wiring harness 15 extends beyond the sleeve 25 from within the inside of the fixed wing 5, across the joint 13 (at which point the harness is encased within the sleeve 25), and out into the wing tip device 11. For clarity, the tip of the fixed wing 5 and the root of the wing tip device 11, are only shown schematically in phantom in Figure 1C.

The wiring harness 15 emerges from the fixed wing 5 at a first end 17, and then crosses the hinge joint 13. The harness 15 enters the wing tip device 11 at a second end 23, and then continue into the wing tip device 11 where it connects to a variety of devices and sensors. The sleeve 25 is bounded at the first and second ends 17, 23 by couplings. The couplings are configured to connect the wiring harness 15 to the adjacent lengths of the wiring harness (not shown) in the fixed wing and the wing tip.

The wiring harness 15, as is known in wiring harnesses *per se* in the art, contains a multiplicity of sheathed electrical cables (not shown individually in the Figures). Each of the electrical cables performs a different function (for example, to supply electrical power to different devices in the aircraft, or to transmit data signals to/from sensors and devices in the aircraft). The cables are collected together in an assembly to form the harness, that is then routed in a suitable manner through the wing 3.

The protective sleeve 25 encases the wiring harness 15. The sleeve 25 follows a path as it extends along its length from the fixed wing 5 to the wing tip device 11. The path includes a helical curve 31 (described in more detail below), positioned between generally linear entry and exit lengths 27 and 29. The path of the sleeve is self-evident to the skilled person; in some circumstances it may be defined by the locus of the centreline of the sleeve.

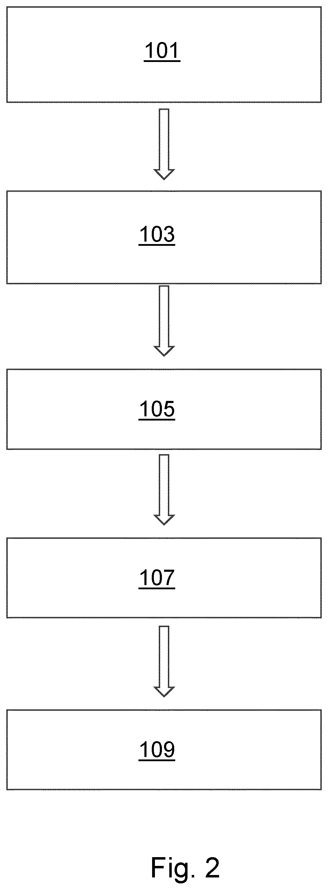

The sleeve 25 has been applied around the wiring harness 15 using a method and a mould according to a first embodiment of the invention. The method and the mould will now be described in more detail with reference to Figures 2 to 5.

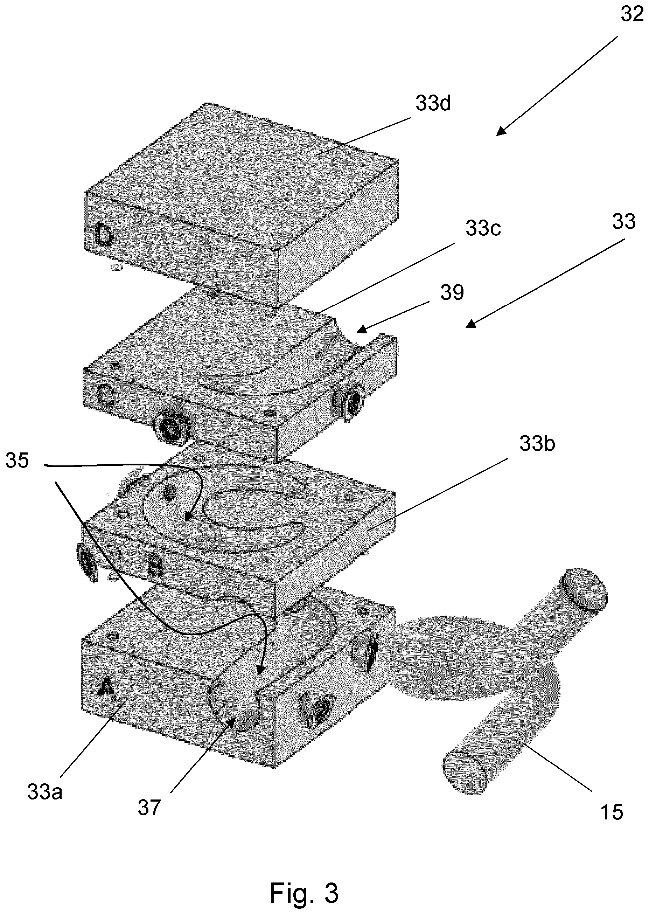

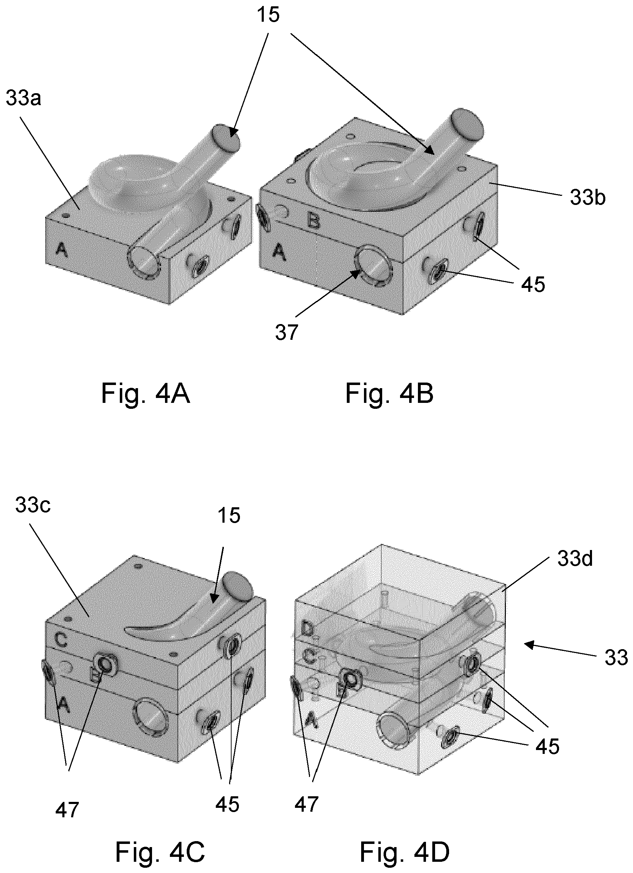

Referring to Figure 2, the method in the first embodiment comprises the initial step 101 of locating the wiring harness 15 in a helical channel 35 of a mould 32. This mould 32 is shown in more detail in Figure 3 and Figures 4A-4D.

The mould 32 comprises a mould body 33 having four sub-sections 33a-33d which are separably stackable on top of one another. When the sub-sections 33a-33d are stacked together, a channel 35 extends from an inlet 37, through the mould body 33 to an outlet 39. The channel 35 follows a path along a helical curve as it extends between the inlet 37 and the outlet 39. This is best illustrated in Figures 4A-4D, to which reference is now made.

Figure 4A shows the base sub-section 33a, with the wiring harness 15 coiled into approximately the correct shape to be moulded. The harness 15 is received in the lower part of the channel 35 and extends through the inlet 37 (the length of harness 15 beyond the inlet and outlet is not shown in Figures 3 and 4A-4D for clarity).

In Figure 4B the second sub-section 33b has been added and the wiring harness 15 has been threaded through the part of the channel 35 formed by that sub-section.

Figure 4C shows the addition of the next sub-section 33c and Figure 4D shows the final sub-section 33d added, thereby completing the channel 35 extending through the mould body 33. As best illustrated in Figure 4D (in which the mould body is shown partially translucent) the channel 35, and the wiring harness 15, follow a path along a helical curve.

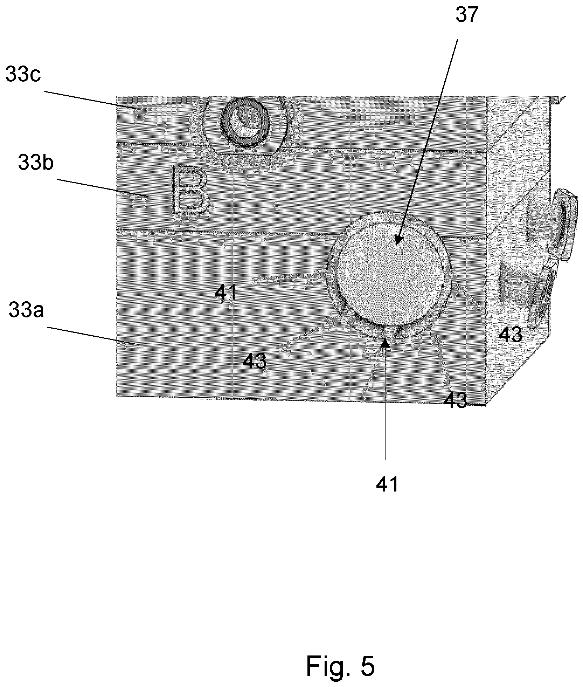

In accordance with step 103 of the method shown in Figure 2, the wiring harness 15 is held centrally within the channel 35 by two sets of centralising spacers 41; one set is located at the inlet 37 and the other is located at the outlet. The set of centralising spacers 41 at the inlet 37 is shown in Figure 5. The spacers comprise a series of ridges 43, each extending a short way along channel 35, and being spaced circumferentially around the inner perimeter of the channel 35. This set of spacers 41 (and a corresponding set at the outlet 39) thus ensure the wiring harness 15 is located centrally within the channel 35. This is beneficial in terms of ensuring a uniform distribution of the protective sleeve (see further description below). In some embodiments, the mould body 33 may comprise additional sets of spacers elsewhere within the mould body 33.

The mould body 33 comprises a series of injection ports 45. The injection ports 45 are configured to receive a fluid sleeve material and are fluidly connected to the channel 35 such that injection of the fluid sleeve material through the ports 45, results in the gap between the wiring harness 15 and the wall of the channel 35 being filled with the fluid material. To allow for the displaced air as the channel 35 is filled with the fluid material, the mould also comprises outlets ports 47. During the method of applying the sleeve 25 to the harness 15, the fluid sleeve material is injected through the injection ports 45 (step 105 in Figure 2). Injection of the material is maintained until the material is seen emerging at all the outlet ports 47. This ensures all the channel 35 has been filled and no air gaps remain.

As a next step, the fluid material is cured (step 105 in Figure 2). In the first embodiment, the fluid material is a fluid pre-cured material, and solidification is by curing the material, but in other embodiments the fluid material may be solidified in other ways (for example it may be a molten material that is cooled to solidify).

Once the material has solidified, the sub-sections 33a-33d of the mould are removed using the reverse of the process shown in, and described with reference to, Figures 4A-4D. The resulting arrangement comprises a wiring harness 15 and a surrounding protective sleeve 25, that follow a helical curve, as shown in Figure 1C.

The above-mentioned process has been described and shown in the context of moulding the helical curve of the sleeve 25. The entry and exit lengths 27, 29 are also encased in moulded sleeves of the same material and that join this helically curved sleeve described above. These lengths are moulded using respective linear moulds (not shown) and are coupled to the inlet 37 and the outlet 39 of the mould body 33.

By moulding the sleeve 25 around the wiring harness 15 in the above-described manner, the sleeve 25 naturally adopts the shape shown in Figure 1C when no external forces are applied. Pre-moulding the protective sleeve 25 in this shape, comprising a helical curve, has been found to be especially beneficial. In particular, the flex of the wiring harness 15, during movement of the wing tip device 11 between the flight and ground configurations, may be reduced and/or able to be better managed. In contrast, it may be problematic if an initially-linear length of sleeve is bent it into a helical path, because internal stresses may be present, and the resulting wiring harness flex behaviour may be sub-optimal.

Whilst the present invention has been described and illustrated with reference to particular embodiments, it will be appreciated by those of ordinary skill in the art that the invention lends itself to many different variations not specifically illustrated herein.

Where in the foregoing description, integers or elements are mentioned which have known, obvious or foreseeable equivalents, then such equivalents are herein incorporated as if individually set forth. Reference should be made to the claims for determining the true scope of the present invention, which should be construed so as to encompass any such equivalents. It will also be appreciated by the reader that integers or features of the invention that are described as preferable, advantageous, convenient or the like are optional and do not limit the scope of the independent claims. Moreover, it is to be understood that such optional integers or features, whilst of possible benefit in some embodiments of the invention, may not be desirable, and may therefore be absent, in other embodiments.

The term 'or' shall be interpreted as 'and/or' unless the context requires otherwise.

## Claims

1. A mould for moulding a sleeve of protective material onto a wiring harness, the mould comprising:
a mould body;
an inlet;
an outlet;
a channel extending through the mould body and connecting the inlet to the outlet;
a plurality of centralising spacers, configured to hold the wiring harness centrally within the channel as the wiring harness extends between the inlet and the outlet;
an injection port arranged to convey fluid sleeve material into the channel such that it surrounds the wiring harness; and
an exit port for conveying excess fluid sleeve material when the channel is full;
wherein the channel follows a path along a helical curve as it extends between the inlet and the outlet.

2. A mould according to claim 1, wherein the mould body comprises a plurality of separable sub-sections, each sub-section defining a part of the channel, and the mould being arranged such that when the sub-sections are assembled they collectively define the channel.

3. A mould according to claim 1 or claim 2, wherein a plurality of centralising spacers are arranged around the inner perimeter of the inlet, and a plurality of centralising spacers are arranged around the inner perimeter of the outlet.

4. A mould according to any preceding claim, further comprising a wiring harness received in the channel thereof, the wiring harness comprising a plurality of conductors for transmitting electrical power and/or data, and the wiring harness following the path along the helical curve as it extends between the inlet and the outlet.

5. A method of applying a sleeve of protective material onto a wiring harness, the method comprising the steps of:
locating the wiring harness into a helical channel in a mould body;
holding the wiring harness centrally within the helical channel as the wiring harness extends along the channel;
injecting fluid sleeve material into the channel such that it surrounds the wiring harness; and
solidifying the sleeve material.

6. A method according to claim 5, further comprising the step of removing the wiring harness, together with the surrounding solidified sleeve, from the mould.

7. A wiring harness encased in a moulded protective sleeve, the sleeve having been applied to the wiring harness using the method of claim 5 or claim 6, such that the wiring harness and the sleeve follow a path along a helical curve along a length of the sleeve.

8. A multi-piece mould for moulding a sleeve of protective material onto a wiring harness, the mould comprising:
a mould body;
an inlet;
an outlet;
a generally circular-cylindrical channel, following a path along a helical curve, the channel extending through the mould body and connecting the inlet to the outlet;
a first multiplicity of spacers, located around the inner perimeter of the inlet and configured to hold the wiring harness centrally within the channel at the inlet;
a second multiplicity of spacers, located around the inner perimeter of the outlet and configured to hold the wiring harness centrally within the channel at the outlet;
a plurality of injection ports arranged to convey flowable sleeve material into the channel such that the flowable material surrounds the wiring harness; and
wherein the mould body comprises separable sub-sections, each sub-section defining a part of the channel and being arranged such that when the sub-sections are assembled they collectively define the channel, and wherein the sub-sections are separable to allow the resulting helically shaped sleeve to be removed from the mould once the flowable sleeve material has solidified.
